# EUROPEAN PATENT SPECIFICATION

(11) **EP 0 646 451 B1**
(45) Date of publication and mention of the grant of the patent: **02.09.1998**
(21) Application number: 94307172.0
(22) Date of filing: 30.09.1994
(51) Int. Cl.: B29C 59/04, B29C 59/06

(54) **Method of forming thermoplastic film with nonwoven fabric-like pattern**
Verfahren zum Formen einer thermoplastischen Folie mit einer vliesstoffähnlichen Strukturierung
Procédé de moulage d'un film thermoplastique avec motif d'un tissu non tissé

(30) Priority: 30.09.1993 JP 244843/93
(43) Date of publication of application: 05.04.1995
(73) Proprietor: UNI-CHARM CORPORATION, Kawanoe-shi Ehime-ken (JP)
(72) Inventor: Koseki, Teruo, Kanonji-shi, Kagawa-ken (JP); Sugimura, Tohru, Kanonji-shi, Kagawa-ken (JP); Hosokawa, Masashi, Yamamoto-cho, Mitoyo-gun, Kagawa-ken (JP)
(74) Representative: Murgatroyd, Susan Elizabeth

(56) References cited:
- WO-A-91/03367
- DE-B- 1 044 391
- GB-A- 725 436
- US-A- 4 601 868
- DATABASE WPI Week 7020, Derwent Publications Ltd., London, GB; AN 70-36174R & JP-B-45 014 198 (KURITA)

## Description

The present invention relates to a method of forming a surface of a thermoplastic film with a nonwoven fabric-like pattern defined by individual fibers intertwined at random.

It is well known to press a thermoplastic film, which has previously been heat-softened, against a mold carrying thereon a given pattern and thereby to form a surface of said film with a pattern in conformity to said given pattern on the mold surface. It is also well known to place such a film under the effect of vacuum or pressure so as to be reliably forced as closely as possible against the mold and thereby to obtain a pattern in faithful conformity even with fine irregularities present on the mold surface.

In the field of sanitary articles such as disposable diapers and sanitary napkins, a plastic film used as an important component of such articles is often brought in close contact with the user's skin during use of the articles. To alleviate a sticky feeling of a plastic film being closely in contact with the user's skin, the film surface has sometimes been formed with a woven or nonwoven fabric-like pattern so that such a pattern may generate on the film surface appropriate irregulaties serving to reduce an area of the film surface to be contacted by the user's skin and correspondingly to alleviate said undesirable sticky feeling, on one hand, and to alleviate a surface gloss peculiar to plastic and thereby to improve the aesthetic appearance of the sanitary articles, on the other hand.

The formation of a woven fabric-like pattern on the surface of a plastic film can be achieved in a relatively simplified process, for example, by vacuum molding with use of a wire gauze as a mold. However, the formation of a nonwoven fabric-like pattern on the film surface can require an unacceptable amount of labor and cost to make a mold, since irregularities corresponding to individual fibers should be formed on the surface of the metal mold by means of engraving or etching.

WO-A-91/03367 discloses some examples of the formation of a nonwoven fibrous pattern on a thermoplastic film, in which the pattern is formed by an engraving roll having a distribution of elongated fiber depressions and raised fiber areas simulating nonwoven fibers. A described method involves the introduction of the thermoplastic film in a plastic state between the embossing roll and a smooth resilient roll or rubber roll which form a nip for embossing film.

JP-B-45014198 discloses a method of forming cylindrical synthetic resin wrappers using an apparatus which comprises cylinders having grooves all around their surfaces, perforations at the bottoms of the grooves, and a pair of wire netting rollers fixed around the cylinders and having a web of endless bands with non-woven or woven surfaces fitted therearound. A vacuum housing is positioned at the inner surfaces of the wire netting rollers to provide a vacuum effect.

Accordingly, it is a principal object of the invention to solve the problems of the prior art as has been mentioned above by molding a plastic film utilizing a metal fiber surfaced mold.

The object set forth above is achieved, in accordance with a first aspect of the invention, by a method of forming a surface of a thermoplastic film with a nonwoven fabric-like pattern defined by many individual fibers intertwined at random, said method comprising the step of applying a heat-softened thermoplastic film to a patterned molding surface of a molding assembly so as to form a surface of said film with a pattern in conformity to said pattern of said molding surface, characterised in that said molding surface is formed by a nonwoven fabric-like layer comprising individual metal fibers intertwined at random, said nonwoven fabric-like layer being air-permeable in the direction of its thickness and being supported from the underside thereof by an air-permeable support member, and in that a suction means is applied to exert a vacuum effect on the nonwoven fabric-like layer from the upper side to the underside thereof, thereby forming the surface of said film with said pattern in conformity to the pattern on the upper side of the nonwoven fabric-like layer under said vacuum effect.

The object set forth above is achieved, in accordance with a second aspect of the invention, by a method of forming a surface of a thermoplastic film with a nonwoven fabric-like pattern defined by many individual fibers intertwined at random, said method comprising the steps of applying a heat-softened thermoplastic film to a patterned molding surface of a molding assembly and applying squeezing means face to face with said molding surface and cooperating with said molding surface to squeeze said thermoplastic film therebetween so as to form a surface of said film with a pattern in conformity to said pattern of said molding surface, characterized in that said molding surface is formed by a nonwoven fabric-like layer comprising individual metal fibers intertwined at random and supported by a support member from the underside thereof, such that the surface of said film is formed with said pattern in conformity to the pattern on the upper side of the nonwoven fabric-like layer under the squeezing effect.

With the methods of molding the thermoplastic film according to these first and second aspects of the invention, the previously heat-softened film is conformed to the nonwoven fabric-like pattern defined by the metal fibers layer under the vacuum effect or the squeezing effect and thereby the surface of film is formed with a nonwoven fabric-like pattern. The molding assembly is easily made merely by fixing said nonwoven fabric-like metal fibers layer onto the supporting member.

The invention will now be described in more detail by way of example, with reference to the accompanying drawings in which,
Fig. 1 is a schematic diagram illustrating a method of forming a film with a nonwoven fabric-like pattern, in accordance with one embodiment of the invention;
Fig. 2 is a perspective view showing, as partially broken away, a rotatable drum; and
Fig. 3 is a schematic diagram illustrating another embodiment of the present invention.

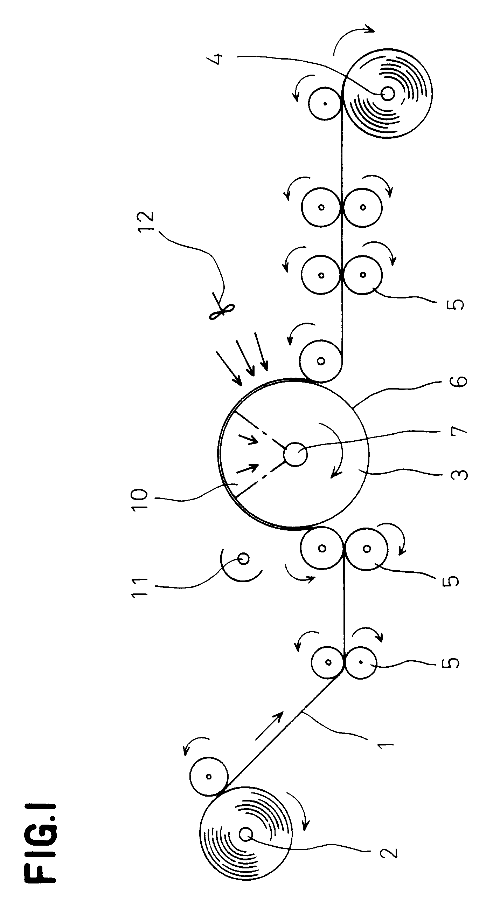

Fig. 1 schematically illustrates a molding process employing a method of the invention. This process flows from the left hand to the right hand as viewed in the diagram and comprises a delivery roll 2, a rotatable molding drum 3, a take-up roll 4, and guide rolls 5 distributed at desired locations along a path of a thermoplastic film 1. The rotatable drum 3 includes an air-permeable peripheral wall 6 rotatably driven clockwise by a shaft 7 and a suction chamber 10 defined by a V-shaped partition within the rotatable drum 3 so that a section of the peripheral wall 6 corresponding to the suction chamber 10 is subjected to a vacuum effect exerted in the direction from the outside to the inner side of the peripheral wall 6 and the remainder section of the peripheral wall 6 extending in front and in rear of the suction chamber 10 is free from such a vacuum effect, i.e., left open to the atmosphere. Above the rotatable drum 3, there are provided an infrared heater 11 and a cooling fan 12 facing each other with the suction chamber 10 between.

During this molding process, the film 1 delivered from the delivery roll 2 is heat-softened by the infrared heater 11 as it travels along the peripheral wall 6 of the rotatable drum 3, then reaches the section of the peripheral wall 6 defined by the suction chamber 10, whereupon forced in close contact with the peripheral wall 6 under a vacuum effect and formed with a pattern in conformity to the surface pattern of the peripheral wall 6. Thereafter the pattern thus formed on the surface of the film 1 is fixed under blast from the cooling fan 12.

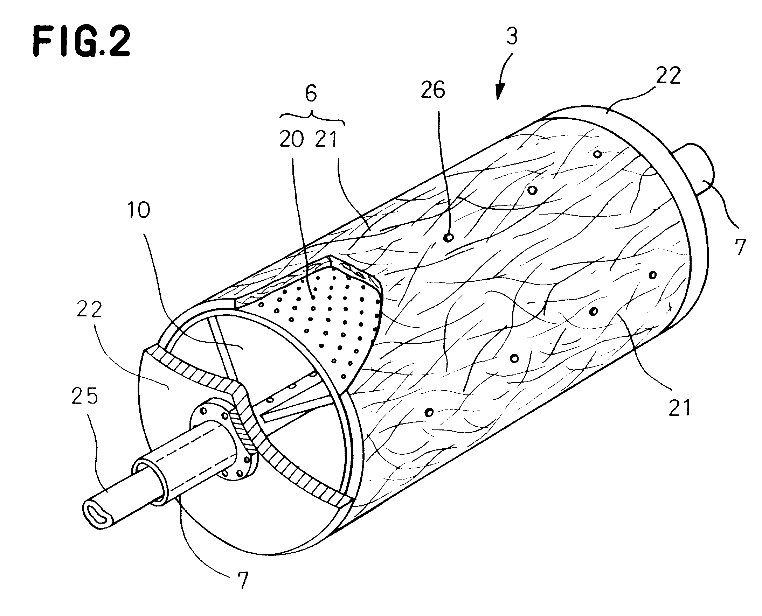

Fig. 2 is a perspective view showing, as partially broken away, nonwoven fabric-like metal fibers layer 21 and side plates 22 of the rotatable drum 3, details of which will be described later. In the rotatable drum 3, the air-permeable peripheral wall 6 comprises a perforated plate 20 and said nonwoven fabric-like metal fibers layer 21 covering the outer surface of said perforated plate 20. The drum 3 further includes a pair of side plates 22 fixed to the perforated plate 20 at longitudinally opposite ends thereof and the shaft 7 fixed to these side plates 22. The shaft 7 partially constructed in the form of a double tube having its inner tube defined by a vacuum tube 25 which is connected at one end with the suction chamber 10 and connected at the other end with a vacuum pump (not shown). The nonwoven fabric-like metal fibers layer 21 is fixed by screws 26 to the perforated plate 20.

Metal fibers made of steel, stainless steel or any other metal intertwined at random so as to present an appearance like a nonwoven fabric sheet is generally referred to as nonwoven fabric-like metal fibers layer 21 and an example of such nonwoven fabric-like metal fibers layer is a card web or felt made of stainless steel staples or filaments manufactured by NIPPON SEISEN Co., Ltd. in Japan and commercially available under the trademark NASLON. It should be understood that said card web can be obtained by carding the metal fibers with various cards and said felt can be obtained by needle punching said web. Metal fibers suitable to be used with the invention should have a circular or substantially circular cross-section, an average fiber diameter of 10 to 400µm (10⁻⁶m), preferably 30 to 200µm, a fiber length of 15 to 200mm, preferably 50 to 150mm, a weight per unit area as the web or felt of 80 to 2,000g/m², preferably 150 to 1,000g/m², and a thickness as the web or felt of 3 to 10mm. Such conditions have empirically been proved to optimize the air-permeability in the direction of thickness of the web or felt so that the film 1 can be reliably molded in conformity to the surface of said web or felt covering the perforated plate 20 under the vacuum effect exerted from the interior of the rotatable drum 3. Advantageously, the damage of said web or felt due to repetitive molding is relatively insignificant. Thermoplastic fibers less than 50%, preferably less than 30% by weight, may be mixed and welded to metal fibers to prevent individual metal fibers once intertwined from getting loose and to improve the efficiency of needle punching to obtain the felt.

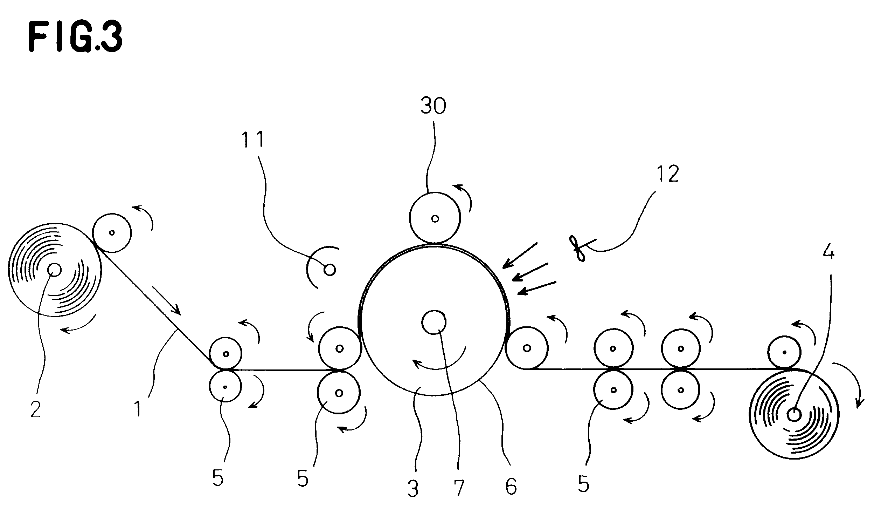

Fig. 3 is a schematic diagram illustrating a molding process different from the process of Fig. 1. As illustrated, the process comprises between the infrared heater 11 and the cooling fan 12 a squeezing roll 30 facing the rotatable drum 3 and adapted to be counterclockwise rotated. The squeeze roll 30 cooperates with the rotatable drum 3 to squeeze the heat-softened film 1 therebetween and thereby to form the surface of the film 1 with the pattern defined by the nonwoven fabric-like metal fibers layer 21. The roll 30 may be an incompressible roll made of steel or a compressible roll made of heat-resisting rubber. The roll 30 may be used with the vacuum suction means of Fig. 1, if desired. It will be obviously understood that the process illustrated by Fig. 3 will be identical to the process of Fig. 1 except for the presence of the squeezing roll 30.

According to the invention, the nonwoven fabric-like metal fibers layer is fixed to a support member to make a mold and thereby the mold can be easily made at a low cost with respect to materials as well as labor.

## Claims

1. A method of forming a surface of a thermoplastic film (1) with a nonwoven fabric-like pattern defined by many individual fibers intertwined at random, said method comprising the step of applying a heat-softened thermoplastic film (1) to a patterned molding surface (6) of a molding assembly (3) so as to form a surface of said film (1) with a pattern in conformity to said pattern of said molding surface (6), characterised in that said molding surface (6) is formed by a nonwoven fabric-like layer (21) comprising individual metal fibers intertwined at random, said nonwoven fabric-like layer (21) being air-permeable in the direction of its thickness and being supported from the underside thereof by an air-permeable support member (20), and in that a suction means (10,25) is applied to exert a vacuum effect on the nonwoven fabric-like layer (21) from the upper side to the underside thereof, thereby forming the surface of said film (1) with said pattern in conformity to the pattern on the upper side of the nonwoven fabric-like layer (21) under said vacuum effect.

2. A method of forming a surface of a thermoplastic film (1) with a nonwoven fabric-like pattern defined by many individual fibers intertwined at random, said method comprising the steps of applying a heat-softened thermoplastic film (1) to a patterned molding surface (6) of a molding assembly (3) and applying squeezing means (30) face to face with said molding surface (6) and cooperating with said molding surface (6) to squeeze said thermoplastic film (1) therebetween so as to form a surface of said film (1) with a pattern in conformity to said pattern of said molding surface (6), characterized in that said molding surface (6) is formed by a nonwoven fabric-like layer (21) comprising individual metal fibers intertwined at random and supported by a support member (20) from the underside thereof, such that the surface of said film (1) is formed with said pattern in conformity to the pattern on the upper side of the nonwoven fabric-like layer (21) under the squeezing effect.

3. A method according to Claim 1 or 2, wherein thermoplastic fibers less than 50% by weight are mixed and welded to the metal fibers of said nonwoven fabric-like layer (21).

4. A method according to claim 1, 2 or 3, wherein the metal fibers have an average diameter of 10 to 400µm.

5. A method according to any preceding claim, wherein the metal fibers have a length of 15 to 200mm.

6. A method according to any preceding claim, wherein said nonwoven fabric-like layer (21) has a weight per unit area of 80 to 2000g/m².

7. A method according to any preceding claim, wherein said nonwoven fabric-like layer (21) has a thickness of 3 to 10mm.

8. A method according to any preceding claim, wherein said nonwoven fabric-like layer (21) comprises a card web or felt made of metal staples or filaments.

## Patentansprüche

1. Verfahren zum Bilden einer Oberfläche einer thermoplastischen Folie (1) mit einer vliessstoffähnlicher Strukturierung, die von vielen individuellen Fasern definiert ist, die willkürlich verflochten sind, wobei das Verfahren den Schritt umfasst, eine durch Wärme erweichte thermoplastische Folie (1) auf eine strukturierte Formungsoberfläche (6) einer Formungsanordnung (3) aufzutragen, um eine Oberfläche der Folie (1) mit einer Strukturierung in Übereinstimmung mit der Strukturierung der Formungsoberfläche (6) zu bilden, dadurch gekennzeichnet, dass die Formungsoberfläche von einer vliessstoffähnlichen Schicht (21) gebildet ist, die individuelle Metallfasern umfasst, die willkürlich verflochten sind, wobei die vliessstoffähnliche Schicht (21) in der Richtung ihrer Dicke luftdurchlässig ist und von der Unterseite davon von einem luftdurchlässigen Tragglied (20) getragen wird, und dass ein Saugmittel (10,25) angewandt wird, um eine Vakuumwirkung auf die vliessstoffähnliche Schicht (21) von der Oberseite zu der Unterseite davon auszuüben, dabei die Oberfläche der Folie (1) in Übereinstimmung mit der Strukturierung auf der Oberseite der vliessstoffähnlichen Schicht (21) unter der Vakuumwirkung gebildet wird.

2. Verfahren zum Bilden einer Oberfläche einer thermoplastischen Folie (1) mit einer vliessstoffähnlicher Strukturierung, die von vielen individuellen Fasern definiert ist, die willkürlich verflochten sind, wobei das Verfahren den Schritt umfasst, eine durch Wärme erweichte thermoplastische Folie (1) auf eine strukturierte Formungsoberfläche (6) einer Formungsanordnung (3) aufzutragen, und ein Quetschmittel (30) gegenüber der Formungsoberfläche (6) anzuwenden, und das mit der Formungsoberfläche (6) zusammenwirkt, um die thermoplastische Folie (1) dazwischen zu quetschen, um eine Oberfläche der Folie (1) mit einer Strukturierung in Übereinstimmung mit der Strukturierung der Formungsoberfläche (6) zu bilden, dadurch gekennzeichnet, dass die Formungsoberfläche (6) aus einer vliessstoffähnlichen Schicht (21) gebildet ist, die individuelle Metallfasern umfasst, die willkürlich verflochten sind, und von einem Tragglied (20) von der Unterseite davon getragen werden, so dass die Oberfläche der Folie (1) mit der Strukturierung in Übereinstimmung mit der Strukturierung auf der Oberseite der vliessstoffähnlichen Schicht (21) unter der Quetschwirkung gebildet wird.

3. Verfahren nach Anspruch 1 oder 2, in dem thermoplastische Fasern geringer als 50 Gewichts% gemischt und an die Metallfasern der vliessstoffähnlichen Schicht (21) geschweißt werden.

4. Verfahren nach Anspruch 1, 2 oder 3, in dem die Metallfasern einen durchschnittlichen Durchmesser von 10 bis 400 µm haben.

5. Verfahren nach einem vorhergehenden Anspruch, in dem die Metallfasern eine Länge von 15 bis 20 mm haben.

6. Verfahren nach einem vorhergehenden Anspruch, in dem die vliessstoffähnliche Schicht (21) ein Gewicht pro Einheitsgebiet von 80 bis 2000g/m² hat.

7. Verfahren nach einem vorhergehenden Anspruch, in dem die vliessstoffähnliche Schicht (21) eine Dicke von 3 bis 10mm hat.

8. Verfahren nach einem vorhergehenden Anspruch, in dem die vliessstoffähnliche Schicht (21) eine Kartenwarenbahn oder einen Filz umfasst, der aus Metallstapellängen oder -fäden hergestellt ist.

## Revendications

1. Méthode de formation de la surface d'un feuillard thermoplastique (1) avec un motif de simili-textile non tissé (21) défini par de nombreuses fibres individuelles entrelacées de façon aléatoire, ladite méthode comportant la phase d'application d'un feuillard thermoplastique (1) ramolli à chaud sur la surface de moulage à motif (6) d'un ensemble de moulage (3) de telle façon à former une surface dudit feuillard (1) avec un motif en conformité avec ledit motif de ladite surface de moulage (6), **caractérisée en ce que**, ladite surface de moulage (6) est formée à partir d'une couche de simili-textile non tissé (21) comportant des fibres métalliques individuelles entrelacées de façon aléatoire, ladite couche de simili-textile non-tissé (21) étant perméable à l'air dans le sens de son épaisseur et étant soutenue par en dessous par un élément de support perméable à l'air (20), et en ce que des moyens d'aspiration (10,25) lui sont appliqués pour obtenir un effet de vide sur la couche de similitexte non-tissé (21) dans le sens du côté supérieur vers le côté inférieur, formant ainsi la surface dudit feuillard (1) avec ledit motif en conformité avec le dessin sur la face supérieur de la couche de similitexte non-tissé (21) sous l'effet du vide.

2. Méthode de formation de la surface d'un feuillard thermoplastique (1) avec un motif de simili-textile non-tissé défini par de nombreuses fibres individuelles entrelacées de façon aléatoire, ladite méthode comportant la phase d'application d'un feuillard thermoplastique (1) ramolli à chaud sur la surface de moulage à motif (6) d'un ensemble de moulage (3) et d'application de moyens de compression (30) de ladite surface de moulage (6) face contre face sur ladite surface de moulage (6) et la coopération avec ladite surface de moulage (6) pour comprimer ledit feuillard thermoplastique (1) entre les deux de telle façon à former une surface dudit feuillard (1) avec un motif en conformité avec ledit motif de ladite surface de moulage (6), **caractérisée en ce que**, ladite surface de moulage (6) est formée à partir d'une couche de simili-textile non tissé (21) comportant des fibres métalliques individuelles entrelacées de façon aléatoire et soutenues par un élément de support (20) depuis le dessous, de façon telle que la surface dudit feuillard (1) est formée avec ledit motif en conformité avec le motif sur la face supérieure de la couche de simili-textile non-tissé (21) suite à l'effet de compression.

3. Méthode selon la revendication 1 ou 2, suivant laquelle les fibres thermoplastiques en poids inférieur à 50% sont mélangées et soudées aux fibres métalliques de ladite couche de simili-textile non-tissé (21).

4. Méthode selon les revendications 1, 2 ou 3, suivant laquelle le diamètre moyen des fibres métalliques est de l'ordre de 10 à 400µm.

5. Méthode selon l'une ou l'autre des revendications précédentes, suivant laquelle la longueur des fibres métalliques est de l'ordre de 15 à 200mm.

6. Méthode selon l'une ou l'autre des revendications précédentes, suivant laquelle le poids unitaire de la couche de simili-textile non-tissé (21) est de l'ordre de 80 à 2000g/m².

7. Méthode selon l'une ou l'autre des revendications précédentes, suivant laquelle l'épaisseur de la couche de simili-textile non-tissé (21) est de l'ordre de

8. Méthode selon l'une ou l'autre des revendications précédentes, suivant laquelle ladite couche de simili-textile non-tissé (21) comporte un voile de carte ou feutre réalisé à partir d'agrafes métalliques ou de filaments.
